# DEMANDE DE BREVET EUROPEEN

(11) **EP 1 942 599 A1**
(43) Date de publication de la demande: **09.07.2008**
(21) Numéro de dépôt: 08100080.4
(22) Date de dépôt: 03.01.2008
(51) Int. Cl.: H04L 9/22, H04L 9/18, H04L 9/06, G06F 21/00

(54) **Protection d'une donnée statique dans un circuit intégré**

(30) Priorité: 03.01.2007 FR 0752515
(71) Demandeur: ST MICROELECTRONICS S.A., 92120 Montrouge (FR)
(72) Inventeur: Bonizec, Loïc, 83470, SAINT MAXIMIN (FR); Chesnais, Stéphane, 13710, FUVEAU (FR)
(74) Mandataire: de Beaumont, Michel

(57) **Abrégé**

L'invention concerne un procédé et un système de protection d'une donnée numérique statique (B) contenue dans un premier élément (13') d'un circuit électronique (1), destiné à être exploité par un deuxième élément de ce circuit, dans lequel : côté premier élément, ladite donnée statique est convertie en un flux dynamique de données par au moins un premier registre à décalage à rétroaction linéaire (31₀, 31₁) représentant un polynôme différent selon la valeur de ladite donnée statique ; le flux dynamique est transmis au deuxième élément ; et côté deuxième élément, le flux dynamique reçu est décodé par au moins un deuxième registre à décalage (34₁) représentant au moins un des polynômes susceptibles d'avoir été utilisé par le premier élément.

## Description

### Domaine de l'invention

La présente invention concerne de façon générale les circuits électroniques et, plus particulièrement, les circuits intégrés comportant un ou plusieurs éléments de mémorisation non volatile de données statiques, c'est-à-dire qui ne sont pas censées être modifiées. L'invention s'applique plus particulièrement à la protection de telles données contre des tentatives de piratage, et notamment aux données de type drapeau, c'est-à-dire conditionnant le fonctionnement du circuit intégré par sélection d'un mode de fonctionnement à partir d'un nombre limité de bits.

### Exposé de l'art antérieur

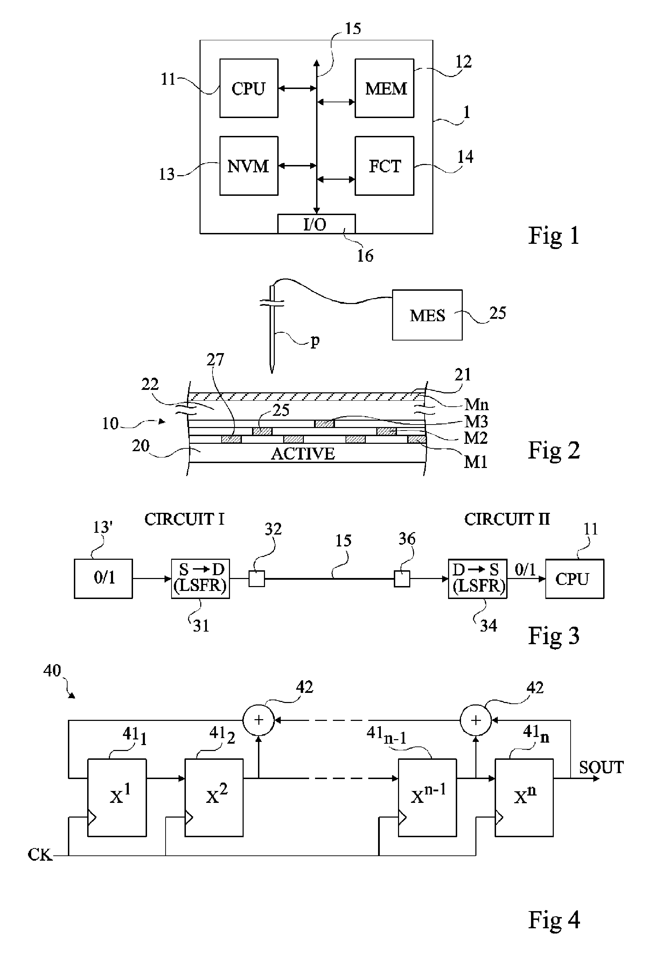

La figure 1 représente, de façon très schématique et sous forme de blocs, un exemple de circuit électronique intégré 1 du type auquel s'applique la présente invention. Dans cet exemple, le circuit comporte une unité de traitement de données 11 (par exemple par une unité centrale de traitement CPU), une ou plusieurs mémoires 12 (MEM) parmi lesquelles au moins un élément de mémorisation non volatile 13 (NVM). D'autres fonctions matérielles ou logicielles peuvent être adjointes au circuit 1 et sont symbolisées en figure 1 par un bloc 14 (FCT). Les différents circuits internes au circuit 1 communiquent entre eux par un ou plusieurs bus 15 de données, de commande et d'adresse ainsi que par des liaisons directes (supposées pour simplifier incluses dans les bus 15) entre les différents éléments. Le plus souvent, le circuit 1 communique avec l'extérieur par l'intermédiaire d'un circuit d'entrée-sortie 16 (I/O) connecté à tout ou partie des bus 15 et servant d'interface entre l'intérieur et l'extérieur du circuit.

La présente invention concerne la protection de données contenues dans un ou plusieurs éléments internes, typiquement de mémorisation non volatile, à la fois contre une découverte de ces données et contre une modification de leur valeur pour intervenir sur le fonctionnement du circuit intégré. De telles attaques servent généralement à pirater des quantités secrètes (clé de chiffrement, d'identification ou d'authentification) ou des programmes censés rester secrets (algorithmes particuliers). Le plus souvent, l'attaquant cherche à basculer le circuit électronique dans un fonctionnement en mode test qui n'est en principe plus accessible en sortie de fabrication. Un tel mode de fonctionnement lui permet d'accéder aux données interdites en mode utilisateur. Plus généralement, la modification d'un état fourni par un élément de mémorisation non volatile peut permettre à un fraudeur de sortir d'un programme de protection du circuit.

Les éléments de mémorisation non volatile concernés préférentiellement par la présente invention sont, par exemple, des éléments de type fusible, de type ROM ou de type EEPROM qui sont censés contenir des données statiques.

La présente invention vise plus particulièrement la protection de telles données contre des attaques dites sous-pointes, c'est-à-dire des actions intrusives sur le circuit ayant pour but de détecter ou de modifier l'état de données statiques par une action directe.

La figure 2 illustre, de façon très schématique et partielle, un exemple de mise en oeuvre d'une telle attaque. Le circuit intégré est représenté partiellement en coupe pour faire ressortir son substrat 20 à partir duquel sont réalisées les zones actives (ACTIVE) des circuits et des niveaux conducteurs supérieurs M1, M2, M3 dans lequel sont réalisées les interconnexions entre ces circuits ainsi que les plots de reprise de contacts. En particulier, les bus 15 sont réalisés dans ces niveaux d'interconnexion généralement métalliques.

Lorsqu'une donnée est stockée sous forme statique (notamment un drapeau sous forme fusible), un inconvénient du point de vue de la sécurité de cette donnée est qu'elle est visible par observation optique. Pour masquer cette visibilité, on prévoit généralement un écran 21 mécanique formé d'un dernier niveau de métallisation Mn rapporté sur un niveau isolant 22 au-dessus du dernier niveau d'interconnexion des circuits internes.

Une attaque sous pointes consiste, pour un fraudeur, à éliminer tout ou partie de l'écran de protection 21, puis à venir contacter au moyen d'une ou plusieurs pointes conductrices p des plots 27 ou trajets d'interconnexion 15 réalisés dans les niveaux de métallisation sous jacent. Les autres extrémités des pointes sont reliées à un dispositif de mesure 25 (MES) permettant, soit de lire l'état du signal transitant sur le conducteur d'interconnexion, soit d'inverser cet état. Comme indiqué ci-dessus, une telle inversion peut permettre de sortir d'un mode de fonctionnement protégé pour passer dans un mode de fonctionnement permettant à l'attaquant de lire ensuite, par exemple par le circuit d'interface 16, des données censées rester à l'intérieur du circuit.

On enterre le plus possible les éléments fusibles (par exemple dans le premier niveau de métallisation M1) pour essayer de les masquer par les conducteurs d'interconnexion 15. Dans le cas d'éléments de mémorisation de type EEPROM, ceux-ci sont réalisés dans la partie active 20 du circuit et les états ne sont disponibles sur les liaisons faisant transiter ces états vers un élément destinataire de ces états (par exemple, l'unité 11 ou une fonction 14) que lors d'une lecture.

Cependant, le simple fait que les interconnexions soient accessibles pour un contact par pointe peut suffire à l'attaquant pour détecter ou modifier l'état lorsque celui-ci est lu par d'autres fonctions du circuit.

### Résumé de l'invention

La présente invention vise à pallier tout ou partie des inconvénients des circuits intégrés connus pour protéger des données statiques.

L'invention vise plus particulièrement la protection de données statiques contre des attaques sous pointes conductrices.

L'invention vise également la protection de données statiques sur un faible nombre de bits et conditionnant un mode de fonctionnement du circuit intégré.

L'invention vise plus particulièrement à protéger les données statiques lors de leur transfert d'un élément interne à un autre élément interne du circuit électronique contre une détection ou une modification de valeur.

Pour atteindre tout ou partie de ces objets ainsi que d'autres, la présente invention prévoit un procédé de protection d'une donnée numérique statique contenue dans un premier élément d'un circuit électronique et destinée à être exploitée par un deuxième élément de ce circuit, dans lequel:
côté premier élément, ladite donnée statique est convertie en un flux dynamique de données par au moins un premier registre à décalage à rétroaction linéaire représentant un polynôme différent selon la valeur de ladite donnée statique ;
le flux dynamique est transmis au deuxième élément; et
côté deuxième élément, le flux dynamique reçu est décodé par au moins un deuxième registre à décalage représentant au moins un des polynômes susceptibles d'avoir été utilisé par le premier élément.

Selon un mode de mise en oeuvre de la présente invention, une rétroaction du deuxième registre est remplacée par le flux dynamique reçu.

Selon un mode de mise en oeuvre de la présente invention, le deuxième registre est à rétroaction linéaire.

Selon un mode de mise en oeuvre de la présente invention, un même premier registre à rétroaction linéaire est utilisé côté premier élément pour convertir un bit de donnée statique, ce registre représentant un polynôme choisi parmi deux polynômes de même degré selon l'état dudit bit.

Selon un mode de mise en oeuvre de la présente invention, l'état de ladite donnée statique modifie les coefficients du polynôme représenté par le premier registre à rétroaction linéaire.

Selon un mode de mise en oeuvre de la présente invention, le flux dynamique reçu par le deuxième élément et la sortie du deuxième registre à décalage sont comparés pour déterminer l'état de la donnée statique.

L'invention prévoit également un système de protection d'une donnée statique contenue dans un premier élément d'un circuit électronique contre une attaque par contact, comportant:
au moins un premier registre à rétroaction linéaire de conversion statique-dynamique de la donnée statique avant fourniture de cette donnée sur une liaison d'interconnexion vers un deuxième élément destinataire de cette donnée ; et
au moins un deuxième registre à décalage de type à rétroaction linéaire de façon à effectuer la conversion inverse côté deuxième élément.

Selon un mode de réalisation de la présente invention, un comparateur compare une sortie du deuxième registre à un flux fourni par le premier registre.

Selon un mode de réalisation de la présente invention, le premier registre à décalage à rétroaction linéaire est paramétrable selon le polynôme qu'il représente en fonction de la valeur de la donnée statique à convertir.

Selon un mode de réalisation de la présente invention, le deuxième registre à décalage représente l'un des polynômes représentés par le premier registre.

Selon un mode de réalisation de la présente invention, une rétroaction du deuxième registre reçoit un flux dynamique fourni par le premier registre.

Selon un mode de réalisation de la présente invention, le deuxième registre est un registre à rétroaction linéaire.

L'invention prévoit également un circuit de stockage d'une donnée statique dans un circuit électronique, comportant:
un élément de mémorisation de la donnée ; et
un circuit de conversion statique-dynamique de cette donnée par un registre à décalage à rétroaction linéaire représentant un polynôme différent selon la valeur de la donnée.

L'invention prévoit également un circuit destinataire d'une donnée statique d'un circuit électronique contenue dans un circuit de mémorisation intégré au même circuit électronique, comportant au moins un registre à décalage de conversion dynamique-statique d'un flux dynamique de données reçu en entrée du circuit destinataire.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles:
la figure 1 décrite précédemment représente, de façon très schématique et sous forme de blocs, un circuit électronique intégré du type auquel s'applique à titre d'exemple la présente invention ;
la figure 2 décrite précédemment illustre une attaque sous pointes que vise plus particulièrement la présente invention ;
la figure 3 représente, de façon très schématique et sous forme de blocs, un mode de réalisation d'un système de protection selon la présente invention ;
la figure 4 représente, de façon très schématique et sous forme de blocs, un registre à décalage à rétroaction linéaire ;
la figure 5 illustre un mode de mise en oeuvre du procédé de protection selon la présente invention ;
la figure 6 est un schéma électrique d'un mode de réalisation d'un dispositif de protection selon la présente invention, côté élément interne stockant la donnée ;
la figure 7 représente un premier mode de réalisation d'un circuit de décodage d'une donnée reçue par un élément interne destinataire selon la présente invention ; et
la figure 8 représente un deuxième mode de réalisation d'un circuit de décodage d'une donnée reçue par un élément interne destinataire selon la présente invention.

De mêmes éléments ont été désignés par de mêmes références aux différentes figures. Pour des raisons de clarté, seuls les étapes et éléments qui sont utiles à la compréhension de l'invention ont été représentés et seront décrits. En particulier, l'exploitation faite des données statiques protégées par la mise en oeuvre de l'invention n'a pas été détaillée, l'invention étant compatible avec toute exploitation classique de telles données statiques, notamment pour conditionner le fonctionnement du circuit.

### Description détaillée

Une caractéristique d'un mode de mise en oeuvre de la présente invention est de rendre dynamique un signal en principe statique qui doit transiter à l'intérieur du circuit intégré entre deux éléments internes de celui-ci.

La figure 3 représente, de façon très schématique et sous forme de blocs, un mode de réalisation d'une architecture ou d'un système de transfert de signaux statiques entre deux circuits internes CIRCUIT I et CIRCUIT II d'un même circuit intégré.

Pour simplifier la description qui suit, on fera référence à des données statiques stockées sous la forme d'un seul bit susceptible de prendre deux états 0 ou 1 mais tout ce qui va être exposé par la suite s'applique également à des données statiques sur plusieurs bits au prix d'une duplication des dispositifs ou, comme on le verra par la suite, en augmentant leur capacité de paramétrage.

Dans l'exemple de la figure 3, le circuit 1 est supposé comporter un élément de mémorisation non volatile 13' de type fusible, ROM ou EPROM stockant un bit de valeur 0 ou 1. L'élément 13' contenant la donnée statique est associé à un circuit 31 de conversion statique-dynamique (S -> D) dont un registre à décalage à rétroaction linéaire (LSFR - Linear Shift Feedback Register) a une sortie série reliée à un plot conducteur 32 de reprise de contact pour interconnexion à l'intérieur du circuit intégré 10. L'ensemble élément 13' et circuit 31 forme un circuit de stockage CIRCUIT I accessible par le plot 32 pour les interconnexions. Ce plot 32 correspond au même type de plot que le plot 27 (figure 2). Le plot 32 est connecté, par exemple, à des conducteurs du bus 15 pour être reçu par un autre élément interne (par exemple une unité de traitement 11). Un circuit 34 de conversion dynamique-statique (D -> S), également à base de registre LSFR est intercalé entre un plot d'entrée 36 relié à la liaison 15 et l'élément 11. L'ensemble circuit 34 et élément 11 forme un circuit CIRCUIT II destinataire de la données statique. Le plot 36 est relié, comme on le verra par la suite, sur la boucle de réaction d'un registre à décalage à rétroaction linéaire du circuit 34 pour décoder le flux de données dynamique envoyé par le registre 31 et fournir la valeur 0 ou 1 correspondant à la valeur de la donnée statique. L'élément destinataire, de même que l'élément émetteur, peut en variante être n'importe quel élément de traitement ou de stockage.

La mise en oeuvre de l'invention requiert de modifier les entrées/sorties des circuits internes dont on souhaite protéger le transfert de données statiques entre eux. D'une part un registre à décalage à rétroaction linéaire 31 est intercalé entre l'élément de mémorisation (par exemple le transistor de l'élément de ROM) et son plot 32 de report de contact vers les niveaux d'interconnexion. D'autre part, un registre à décalage 34 doit être prévu entre le plot d'entrée 36 du circuit récepteur et ces circuits internes classiques d'exploitation de la donnée statique.

Les registres à décalage à rétroaction linéaire étant réalisés dans les zones actives du circuit intégré, des autres éléments actifs auxquels ils sont respectivement associés, ne sont pas détectables par une attaque sous pointe.

La figure 4 représente, de façon schématique et sous forme de blocs, un exemple d'architecture d'un registre à décalage à rétroaction linéaire 40. Un tel registre est constitué d'une succession de bascules 41₁, 41₂..., 41ₙ₋₁ et 41ₙ en série (les sorties d'une bascule de rang précédent étant reliées à l'entrée de données de la bascule de rang suivant). La sortie de la dernière bascule 41ₙ est rebouclée sur l'entrée de la première 41₁ et un ou plusieurs additionneurs 42 sont intercalés sur le trajet de réaction pour combiner le bit de réaction avec certaines sorties de bascule (dans cet exemple, la sortie de la bascule 41₂ et de la bascule 41ₙ₋₁).

Le rôle d'un registre LSFR est de représenter, par le nombre de bascules et par le nombre et les positions des additionneurs, un polynôme d'expression 1 + α₁.X¹ + (α₂.X² + ... + αₙ₋₁.Xⁿ⁻¹ + αₙ.Xⁿ. Le degré n du polynôme est défini par le nombre de bascules et ses coefficients α sont définis comme ayant des valeurs 0 ou 1 selon que la sortie de la bascule représentant le degré correspondant est ou non combinée avec la réaction.

Les bascules sont toutes synchronisées par un même signal d'horloge CK et on utilise soit une sortie série en prélevant la sortie SOUT d'une des bascules (par exemple la dernière Xⁿ), soit plusieurs sorties des bascules en parallèle pour former un mot de données parallèle.

Fonctionnellement, un registre LSFR est un registre à décalage dont le bit d'entrée est une fonction linéaire de ses états précédents.

De tels registres sont généralement utilisés en cryptographie ou en transmission de données afin de chiffrer des données transmises ou pour générer des nombres aléatoires.

Dans ces applications, les polynômes représentés par les registres sont généralement choisis pour être des polynômes primitifs qui ont, entre autres, pour propriétés que le polynôme réciproque forme également un polynôme primitif.

Dans les applications de chiffrement, les bits de la clé de chiffrement sont introduits en parallèle sur les entrées respectives des bascules du registre. Les données chiffrées sont alors obtenues en prélevant toutes les sorties des bascules en parallèle ou en prélevant la sortie SOUT série. La clé joue sur la graine du polynôme c'est-à-dire fixe la valeur X à un instant donné.

Une propriété des registres à rétroaction linéaire est qu'en introduisant le flux de données SOUT sur un registre identique (représentant le même polynôme) et en lui fournissant la même clé, les sorties respectives des bascules fournissent la donnée d'origine sur les sorties des différentes bascules. Cela permet un déchiffrement.

Dans une application à la génération de nombres aléatoires, il n'est pas nécessaire d'introduire de données dans le registre, le simple fait de le faire tourner au moyen du signal d'horloge fournit en sortie un flux de bits qui a un cycle de répétition suffisamment long pour paraître comme aléatoire.

Le plus souvent, on cherche à représenter des polynômes dits maximum, c'est-à-dire ayant, pour un degré donné, un cycle de répétition le plus long possible. Il faut pour cela que le nombre de coefficients α à l'état 1 soit impair, sachant que les degrés 0 et n du polynôme sont forcément présents. Cela revient à dire qu'il faut un nombre impair de combinaisons sur le trajet de réaction du registre.

L'exemple de la figure 4 concerne une réalisation de registre LFSR dite externe dans laquelle les additionneurs sont placés sur le trajet de réaction. Une autre famille de registre LSFR prévoit de placer les éléments de combinaison entre les bascules elles-mêmes. Ces registres sont alors appelés registres LSFR internes.

La présente invention propose, dans l'application à la conversion de données statiques en données dynamiques à l'intérieur d'un circuit intégré, de modifier les coefficients du polynôme selon l'état du bit de la donnée à masquer. Avec un registre définissant un polynôme primitif (maximum ou non), si le flux série est fourni en entrée de la réaction (au lieu de fournir le signal de sortie de la dernière bascule) du registre LSFR de réception représentant le même polynôme, la sortie de ce registre de réception (sortie de sa dernière bascule) est alors égale à l'entrée. De même, la sortie de la dernière bascule d'un registre à décalage à rétroaction linéaire représentant le même polynôme que celui ayant codé la donnée à masquer est identique au flux série retardé d'un cycle.

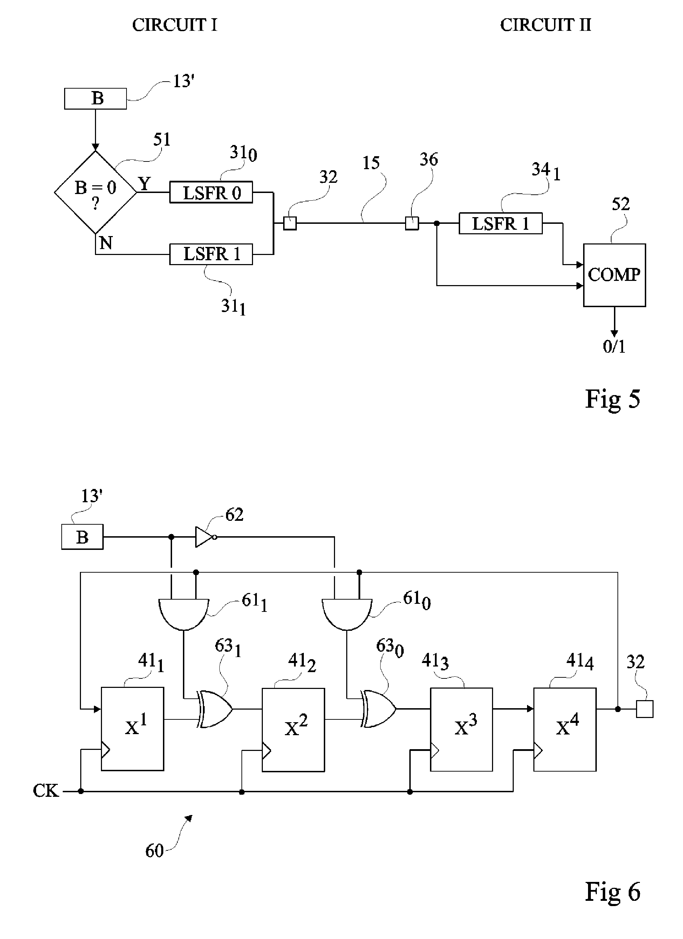

La figure 5 représente un schéma fonctionnel simplifié illustrant un mode de mise en oeuvre du procédé de protection selon la présente invention. Un bit B à protéger est contenu dans un élément de mémorisation 13' d'un premier circuit interne CIRCUIT I. Lors d'une lecture de ce bit, son état est testé (bloc 51, B=0 ?). Selon cet état, le circuit active un premier 31₀ (LSFR 0) ou un deuxième 31₁ (LSFR 1) registre LSFR. On verra par la suite qu'en pratique un même registre peut être configuré différemment selon l'état du bit d'entrée. Les sorties des registres 31₀ et 31₁ sont reliées au plot 32 de sorte que le flux dynamique de bit transite par l'interconnexion 15 jusqu'au plot d'entrée 36 du circuit devant recevoir la donnée statique. Le flux de bit est envoyé à un registre 34₁ (LSFR 1) définissant le même polynôme que l'un des deux registres 31₀ et 31₁ d'émission. La sortie série du registre 34₁ est comparée bloc 52 (COMP) au flux d'entrée prélevé sur le plot 36 et cette comparaison permet de déterminer l'état statique 0 ou 1 du bit B. En effet, si le polynôme représenté par le registre 34₁ est identique à celui utilisé pour la conversion statique-dynamique, son flux de sortie et le flux d'entrée sont identiques. Par conséquent, il suffit de vérifier qu'une comparaison bit à bit entre la sortie et l'entrée donne un résultat invariant pour déterminer, en réception, quel est le polynôme utilisé en émission, donc l'état du bit envoyé.

La figure 6 représente un mode de réalisation d'un circuit de conversion statique-dynamique 60 selon un mode de réalisation de la présente invention. Dans cet exemple, un registre LSFR de degré 4 respectant une architecture interne (additionneurs entre les bascules) est prévu. Le circuit 60 est capable de définir deux polynômes différents d'ordre 4 selon l'état du bit B. Pour cela, l'élément 13' est relié à une première entrée d'une porte de type ET 61₁ et, par un inverseur 62 à une première entrée d'une deuxième porte logique de type ET 61₀. Les deuxièmes entrées respectives des portes 61₀ et 61₁ sont reliées au trajet de réaction direct entre la dernière bascule 41₄ et la première bascule 41₁. La sortie de la première bascule 41₁ traverse un additionneur (porte OU Exclusif-XOR) 63₁ dont la sortie est reliée à l'entrée de la bascule 41₂. La sortie de la bascule 41₂ est envoyée sur une première entrée d'une porte 63₀ de type XOR dont la sortie est reliée à l'entrée de la bascule 41₃. Les deuxièmes entrées respectives des portes 63₀ et 63₁ reçoivent les sorties des portes 61₀ et 61₁. Les entrées d'horloge de toutes les bascules reçoivent un même signal d'horloge CK et, selon la nature des bascules utilisées, sont susceptibles également de recevoir un signal de réinitialisation (non représenté).

Si le bit B est à l'état 0, la porte 61₁ fournit en sortie un état 0 quel que soit l'état du bit transitant sur la boucle de réaction. Par contre, la porte 61₀ est activée par l'inversion de l'état du bit B de sorte que la fonction d'addition 63₀ est active dans le polynôme. Le polynôme primitif ainsi défini est 1 + X² + X⁴.

Si l'état du bit B est 1, la porte 61₀ est toujours bloquée alors que la porte 61₁ active la fonction d'addition 63₁. Par conséquent, le polynôme alors représenté est 1 + X + X⁴.

Le flux envoyé sur le plot 32 est prélevé, par exemple, en sortie de la dernière bascule 41₄.

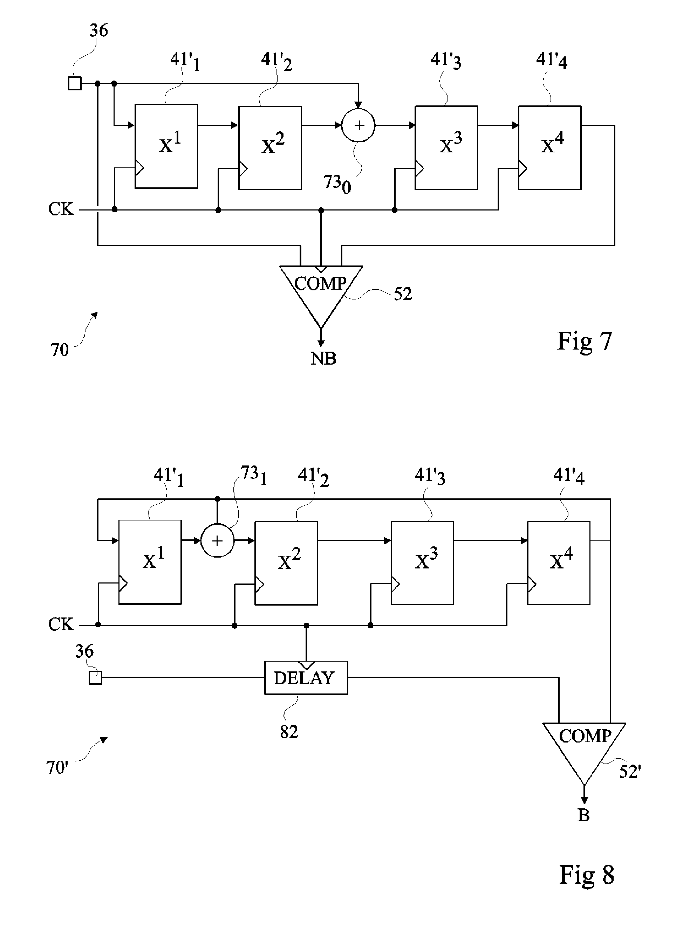

La figure 7 représente un premier mode de réalisation d'un circuit 70 de décodage côté circuit destinataire devant exploiter la donnée statique.

Le circuit 70 comporte un registre de type LSFR représentant l'un des deux polynômes du circuit d'émission 60. Dans cet exemple, on suppose la représentation du polynôme 1 + X² + X⁴ formée de quatre bascules 41'₁ à 41'₄ et d'un additionneur 73₀ entre les bascules 41'₂ et 41'₃.

Le plot 36 recevant le flux à décoder est relié d'une part en entrée de la première bascule 41'₁ et d'autre part sur une des entrées de l'additionneur 73₀, ce qui revient à remplacer la réaction du registre (sortie de la bascule 41'₄) par le flux d'entrée fourni par le circuit d'émission. La sortie de la dernière bascule 41'₄ ainsi que le signal d'entrée (borne 36) sont envoyés sur des entrées d'un comparateur 52 cadencé par le signal d'horloge CK. Si les deux entrées du comparateur sont toujours identiques, alors le registre LFSR est celui utilisé lors de l'émission. Dans l'exemple, le comparateur 52 fournit l'état inverse NB de l'état envoyé par le circuit d'émission. Le comparateur 52 fournit l'état inverse dans la mesure où le registre à décalage représente le polynôme 1 + X² + X⁴, ce qui correspond au codage d'un zéro par le circuit de la figure 6.

Si le démarrage des registres de codage et de décodage (d'émission et de réception) sont synchronisés, c'est-à-dire si le registre du circuit 70 est réinitialisé en même temps que le registre du circuit 60, le résultat est interprétable sans retard. Dans le cas contraire (si le registre du circuit 70 est démarré à la réception du flux), l'état fourni par le comparateur 52 est interprétable au bout d'un nombre de cycles d'horloge correspondant au degré du polynôme.

La figure 8 représente un deuxième mode de réalisation d'un dispositif 70' de conversion dynamique-statique selon la présente invention. Dans cet exemple, le registre à décalage à rétroaction linéaire représente le polynôme 1 + X + X⁴ pour décoder directement l'état du bit B de la figure 6 (un additionneur 73₁ étant intercalé entre les bascules 41'₁ et 41'₂). Une autre différence par rapport au décodeur de la figure 7 est que la réaction du registre LSFR n'est pas modifiée.

Dans ce mode de réalisation, l'entrée 36 du flux à décoder est reliée à une première entrée d'un comparateur 52' après traversée d'un élément retardateur 82 apportant un retard, par exemple, d'un cycle d'horloge. Une deuxième entrée du comparateur 52' est reliée en sortie de la dernière bascule 41'₄. Le comparateur 52' fournit le résultat du bit B. Si le flux d'entrée a été généré à partir du même polynôme, le comparateur 52' fournit un état invariant.

Si le circuit 70' est synchronisé avec le circuit 60, le résultat est interprétable dès que l'élément 82 fournit un état. Sinon, il est interprétable à partir d'un nombre de cycles au moins égal au degré du polynôme plus un. Le retard apporté par l'élément 82 est alors choisi, par exemple au moins égal au degré du polynôme plus un.

Bien entendu, d'autres réalisations que celles illustrées aux figures 6 et 8 pourront être prévues pourvu de respecter les fonctionnalités correspondantes. De même, le degré des polynômes choisis dépend des réalisations et, en particulier, de la robustesse souhaitée pour le signal dynamique. Le déclenchement du circuit de décodage 70 ou 70' peut être périodique (par exemple, toutes les secondes) pour vérifier périodiquement l'état de la donnée statique.

Si on souhaite convertir une donnée de plus d'un bit, on peut soit prévoir un dispositif par bit et autant de lignes de transmission que de bits, soit rendre, par une logique combinatoire adaptée, le polynôme du registre LSFR d'émission paramétrable parmi 2^{k} polynômes, où k représente le nombre de bits de la donnée. Côté réception, on utilise alors préférentiellement un circuit de conversion dynamique-statique comportant les 2^{k} polynômes possibles pour obtenir le résultat de la détection.

Bien entendu, la présente invention est susceptible de diverses variantes et modifications qui apparaîtront à l'homme de l'art. En particulier, la mise en oeuvre pratique de l'invention à partir des indications fonctionnelles données ci-dessus sont à la portée de l'homme du métier en utilisant des composants électroniques en eux-mêmes classiques.

De plus, l'adaptation des entrées/sorties des circuits de stockage de données statique et des circuits d'interprétation de ces données est également à la portée de l'homme du métier. On notera cependant que l'invention s'appliquant plus particulièrement à protéger les données contre des attaques sous pointes, cela conduit, au moins côté émission, à une réalisation matérielle (le décodage pouvant le cas échéant être effectué de façon logicielle).

## Revendications

1. Procédé de protection d'une donnée numérique statique (B) contenue dans un premier élément (13') d'un circuit électronique (1) et destinée à être exploitée par un deuxième élément (11) de ce circuit, **caractérisé en ce que** :
côté premier élément, ladite donnée statique est convertie en un flux dynamique de données par au moins un premier registre à décalage à rétroaction linéaire (31₀, 31₁ ; 41₁, 41₂, 41₃, 41₄, 61₀, 61₁, 62, 63₀, 63₁) représentant un polynôme différent selon la valeur de ladite donnée statique ;
le flux dynamique est transmis au deuxième élément ; et
côté deuxième élément, le flux dynamique reçu est décodé par au moins un deuxième registre à décalage (34₁ ; 41'₁, 41'₂, 41'₃, 41'₄, 73₀ ; 41'₁, 41'₂, 41'₃, 41'₄, 73₁) représentant au moins un des polynômes susceptibles d'avoir été utilisé par le premier élément.

2. Procédé selon la revendication 1, dans lequel une rétroaction du deuxième registre (41'₁, 41'₂, 41'₃, 41'₄, 73₀) est remplacée par le flux dynamique reçu.

3. Procédé selon la revendication 1, dans lequel le deuxième registre (41'₁, 41'₂, 41'₃, 41'₄, 73₁) est à rétroaction linéaire.

4. Procédé selon l'une quelconque des revendications 1 à 3, dans lequel un même premier registre à rétroaction linéaire (41₁, 41₂, 41₃, 41₄, 61₀, 61₁, 62, 63₀, 63₁) est utilisé côté premier élément pour convertir un bit (B) de donnée statique, ce registre représentant un polynôme choisi parmi deux polynômes de même degré selon l'état dudit bit.

5. Procédé selon l'une quelconque des revendications 1 et 4, dans lequel l'état de ladite donnée statique (B) modifie les coefficients du polynôme représenté par le premier registre à rétroaction linéaire (41₁, 41₂, 41₃, 41₄, 61₀, 61₁, 62, 63₀, 63₁).

6. Procédé selon l'une quelconque des revendications 1 à 5, dans lequel le flux dynamique reçu par le deuxième élément et la sortie du deuxième registre à décalage sont comparés (52, 52') pour déterminer l'état de la donnée statique (B).

7. Système de protection d'une donnée statique (B) contenue dans un premier élément (13') d'un circuit électronique (1) contre une attaque par contact, **caractérisé en ce qu'**il comporte:
au moins un premier registre à rétroaction linéaire (31₀, 31₁ ; 41₁, 41₂, 41₃, 41₄, 61₀, 61₁, 62, 63₀, 63₁) de conversion statique-dynamique de la donnée statique avant fourniture de cette donnée sur une liaison d'interconnexion vers un deuxième élément (11) destinataire de cette donnée ; et
au moins un deuxième registre à décalage (34₁ ; 41'₁, 41'₂, 41'₃, 41'₄, 73₀ ; 41'₁, 41'₂, 41'₃, 41'₄, 73₁) de type à rétroaction linéaire de façon à effectuer la conversion inverse côté deuxième élément (11).

8. Système selon la revendication 7, dans lequel un comparateur (52, 52') compare une sortie du deuxième registre (34₁ ; 41'₁, 41'₂, 41'₃, 41'₄, 73₀ ; 41'₁, 41'₂, 41'₃, 41'₄, 73₁) à un flux fourni par le premier registre (31₀, 31₁ ; 41₁, 41₂, 41₃, 41₄, 61₀, 61₁, 62, 63₀, 63₁).

9. Système selon l'une quelconque des revendications 7 et 8, dans lequel le premier registre à décalage à rétroaction linéaire (41₁, 41₂, 41₃, 41₄, 61₀, 61₁, 62, 63₀, 63₁) est paramétrable selon le polynôme qu'il représente en fonction de la valeur de la donnée statique (B) à convertir.

10. Système selon l'une quelconque des revendications 7 à 9, dans lequel le deuxième registre à décalage (34₁ ; 41'₁, 41'₂, 41'₃, 41'₄, 73₀ ; 41'₁, 41'₂, 41'₃, 41'₄, 73₁) représente l'un des polynômes représentés par le premier registre (31₀, 31₁ ; 41₁, 41₂, 41₃, 41₄, 61₀, 61₁, 62, 63₀, 63₁).

11. Système selon l'une quelconque des revendications 7 à 10, dans lequel une rétroaction du deuxième registre (41'₁, 41'₂, 41'₃, 41'₄, 73₀) reçoit un flux dynamique fourni par le premier registre (31₀, 31₁ ; 41₁, 41₂, 41₃, 41₄, 61₀, 61₁, 62, 63₀, 63₁).

12. Système selon l'une quelconque des revendications 7 à 11, dans lequel le deuxième registre (41'₁, 41'₂, 41'₃, 41'₄, 73₁) est un registre à rétroaction linéaire.

13. Circuit de stockage d'une donnée statique dans un circuit électronique (1), **caractérisé en ce qu'**il comporte :
un élément de mémorisation (13') de la donnée ; et
un circuit (31 ; 60) de conversion statique-dynamique de cette donnée par un registre à décalage à rétroaction linéaire (31₀, 31₁ ; 41₁, 41₂, 41₃, 41₄, 61₀, 61₁, 62, 63₀, 63₁) représentant un polynôme différent selon la valeur de la donnée, pour la mise en oeuvre du procédé selon l'une quelconque des revendications 1 à 6.

14. Circuit destinataire d'une donnée statique d'un circuit électronique (1) contenue dans un circuit de mémorisation (13') intégré au même circuit électronique, **caractérisé en ce qu'**il comporte au moins un registre à décalage (34₁ ; 41'₁, 41'₂, 41'₃, 41'₄, 73₀ ; 41'₁, 41'₂, 41'₃, 41'₄, 73₁) de conversion dynamique-statique d'un flux dynamique de données reçu en entrée du circuit destinataire, pour la mise en oeuvre du procédé selon l'une quelconque des revendications 1 à 6.
